# EUROPÄISCHE PATENTSCHRIFT

(11) **EP 0 629 794 B1**
(45) Veröffentlichungstag und Bekanntmachung des Hinweises auf die Patenterteilung: **12.03.1997**
(21) Anmeldenummer: 94107754.7
(22) Anmeldetag: 19.05.1994
(51) Int. Cl.: F16H 3/091

(54) **Mehrgang-Stufengetriebe**
Stepped transmission
Transmission à rapports étagés

(30) Priorität: 18.06.1993 DE 4320318
(43) Veröffentlichungstag der Anmeldung: 21.12.1994
(73) Patentinhaber: GETRAG Getriebe- und Zahnradfabrik Hermann Hagenmeyer GmbH & Cie, D-71636 Ludwigsburg (DE)
(72) Erfinder: Lees, Wolfgang, D-71634 Ludwigsburg (DE); Mörk, Gerold, D-71336 Waiblingen (DE)
(74) Vertreter: Witte, Alexander, Dr.-Ing.

(56) Entgegenhaltungen:
- EP-A- 0 375 420
- EP-A- 0 512 214
- WO-A-89/03946
- FR-A- 2 084 203
- GB-A- 1 162 333
- US-A- 4 570 503

## Beschreibung

Die Erfindung betrifft ein Mehrgang-Stufengetriebe mit einer Antriebswelle, mit einer ersten und einer zweiten Zwischenwelle und mit einer Abtriebswelle, wobei die Wellen zueinander parallel, jedoch nur jeweils paarweise in einer gemeinsamen Ebene angeordnet sind und auf den Wellen angeordnete Zahnräder jeweils zu Paaren miteinander kämmen, ferner Schaltmuffen zum drehfesten Verbinden jeweils eines der als Losräder ausgebildeten Zahnräder der Paare mit der sie jeweils tragenden Welle vorgesehen sind, während das jeweils andere Rad der Paare als Festrad ausgebildet ist, weiterhin die Antriebswelle eine erste, in zwei Schaltrichtungen verschiebbare Schaltmuffe zum wahlweisen Einlegen zweier Vorwärtsgänge des Getriebes, hingegen die mit der Abtriebswelle über ein Zahnradpaar verbundene zweite Zwischenwelle eine zweite, in zwei Schaltrichtungen verschiebbare Schaltmuffe zum wahlweisen Einlegen zweier weiterer Gänge des Getriebes und schließlich die erste Zwischenwelle eine dritte Schaltmuffe tragen.

Ein Mehrgang-Stufengetriebe der vorstehend genannten Art ist aus der DE-PS 33 20 494 bekannt.

Bei dem bekannten Mehrfach-Stufengetriebe ist die Anordnung von Antriebswelle und zweiter Zwischenwelle konventionell, indem jeweils (für die niedrigen vier Vorwärtsgänge) zwei Zahnräder als Festräder und zwei weitere Zahnräder als Los- bzw. Schalträder auf den beiden genannten Wellen angeordnet sind. Bei dem bekannten Getriebe ist die Funktion des Rückwärtsganges auf die erste Zwischenwelle verlagert. Hierzu trägt die erste Zwischenwelle zwei Losräder, die über eine weitere Schaltmuffe miteinander drehfest verbindbar, aber weiterhin auf der ersten Zwischenwelle drehbar angeordnet sind. Diese beiden Losräder der ersten Zwischenwelle kämmen jeweils mit einem Losrad auf der Antriebswelle und der zweiten Zwischenwelle, nämlich mit dem Losrad des dritten Ganges auf der Antriebswelle und dem Losrad des ersten Ganges auf der zweiten Zwischenwelle. Zusätzlich ist bei dem bekannten Getriebe noch ein Zahnradpaar für einen fünften Gang auf der Antriebswelle bzw. der zweiten Zwischenwelle vorgesehen.

Das bekannte Getriebe weist eine geringere axiale Baulänge, verglichen mit älteren Getriebetypen auf, bei denen alle fünf Vorwärtsgänge und der Rückwärtsgang eines 5-Gang-Getriebes in parallelen Zahnradpaar-Ebenen auf zwei Getriebewellen angeordnet waren.

Bei dem bekannten Getriebe werden jedoch insgesamt vier Schaltmuffen benötigt. Eine erste, in zwei Schaltrichtungen verschiebbare Schaltmuffe für den dritten und den vierten Gang ist auf der Antriebswelle, eine zweite, ebenfalls in zwei Schaltrichtungen verschiebbare Schaltmuffe für den ersten und den zweiten Gang ist auf der zweiten Zwischenwelle, eine weitere, nur in einer Schaltrichtung verschiebbare Schaltmuffe für den fünften Gang ist ebenfalls auf der zweiten Zwischenwelle und eine vierte, ebenfalls nur in einer Schaltrichtung verschiebbare Schaltmuffe für den Rückwärtsgang ist, wie bereits erwähnt, auf der ersten Zwischenwelle angeordnet.

Ein weiteres Mehrgang-Stufengetriebe mit mindestens zwei Zwischenwellen ist noch aus der DE-OS 41 36 455 bekannt. Dieses bekannte Getriebe ist ein 6-Gang-Getriebe. Zum wahlweisen Einlegen der sechs Vorwärtsgänge dienen drei jeweils in zwei Schaltrichtungen verschiebbare Schaltmuffen, während zum Einlegen des Rückwärtsganges eine weitere, nur in einer Schaltrichtung verschiebbare Schaltmuffe vorgesehen ist.

Der Erfindung liegt die Aufgabe zugrunde, ein Mehrgang-Stufengetriebe der eingangs genannten Art dahingehend weiterzubilden, daß mit einem Minimum von Schaltmuffen und Schaltaufwand und damit einem Minimum an Bauraum eine größtmögliche Anzahl von Vorwärtsgängen sowie ein Rückwärtsgang synchronisiert wahlweise einlegbar sind.

Diese Aufgabe wird erfindungsgemäß dadurch gelöst, daß die dritte Schaltmuffe in zwei Schaltrichtungen verschiebbar ist und zum wahlweisen Einlegen zweier zusätzlicher Vorwärtsgänge dient.

Die der Erfindung zugrundeliegende Aufgabe wird auf diese Weise vollkommen gelöst. Die Erfindung löst sich nämlich von dem bekannten Konzept, für das synchronisierte, wahlweise Einlegen des Rückwärtsganges jeweils eine separate, nur in einer Schaltrichtung verschiebbare Schaltmuffe einzusetzen. Sie integriert vielmehr den Rückwärtsgang in der Weise, daß der Rückwärtsgang und einer der Vorwärtsgänge über eine gemeinsame, in zwei Schaltrichtungen verschiebbare Schaltmuffe einlegbar sind. Dies ist mit der genannten Verteilung der Funktionen auf die Antriebswelle und die beiden Zwischenwellen möglich.

Bei einer bevorzugten Ausgestaltung der Erfindung, die ein 5-Gang-Getriebe mit synchronisiertem Rückwärtsgang betrifft, dient die erste Schaltmuffe zum wahlweisen Einlegen des dritten und des vierten Ganges, die zweite Schaltmuffe zum wahlweisen Einlegen des fünften und des Rückwärtsganges und die dritte Schaltmuffe zum wahlweisen Einlegen des ersten und des zweiten Ganges.

Besonders bevorzugt ist dabei, wenn das Losrad des ersten Ganges mit dem Losrad des Rückwärtsganges kämmt.

Auf diese Weise ergibt sich eine besonders bevorzugte, kompakte Bauform.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: ein Schaltschema eines Ausführungsbeispiels eines erfindungsgemäßen Getriebes, dargestellt am Beispiel eines 5-Gang-Getriebes mit synchronisiertem Rückwärtsgang; und
- Fig. 2 bis 6: schematische Darstellungen der beteiligten Zahnräder in den Ebenen II bis VI von Fig. 1.

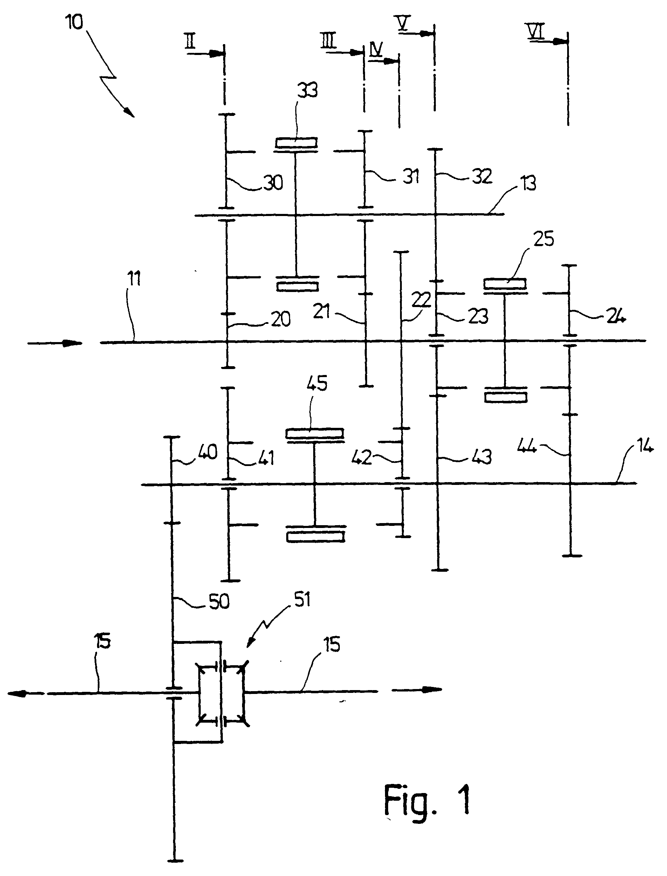

In Fig. 1 bezeichnet 10 insgesamt ein Getriebe, nämlich ein 5-Gang-Getriebe mit synchronisiertem Rückwärtsgang. Es versteht sich jedoch, daß die Erfindung auch bei Getrieben mit anderer Gangzahl einsetzbar ist, insbesondere auch bei einem 4-Gang-Getriebe oder einem 6-Gang-Getriebe, jeweils ebenfalls mit synchronisiertem Rückwärtsgang.

Das Getriebe 10 umfaßt eine Antriebswelle 11, die von einem (nicht dargestellten) Antriebsmotor angetrieben wird.

Parallel zur Antriebswelle 11 umfaßt das Getriebe eine erste Zwischenwelle 13 sowie eine zweite Zwischenwelle 14. Schließlich ist noch eine Abtriebswelle 15 vorgesehen, die unmittelbar zu den Antriebsrädern eines Fahrzeuges führt.

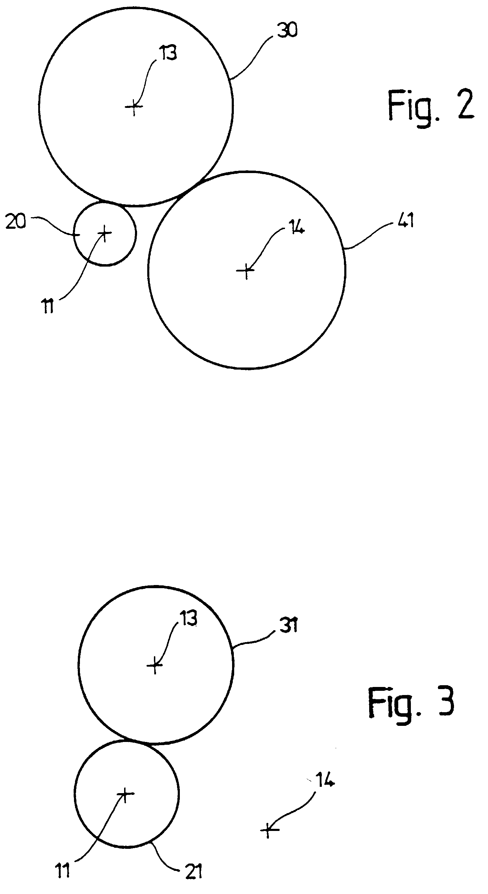

Die Darstellung der Fig. 1 ist eine sogenannte abgewickelte Darstellung, bei der sich die vier Wellen 11, 13, 14 und 15 in einer Ebene befinden. In der Realität liegen diese Wellen 11, 13, 14, 15 jedoch zwar zueinander parallel, jedoch lediglich paarweise in einer gemeinsamen Ebene. Dies ist in den Fig. 2 bis 6 für die Wellen 11, 13 und 14 verdeutlicht.

Die Antriebswelle 11 trägt Zahnräder 20 bis 24. Dabei sind die Zahnräder 20 bis 22 als Festräder drehstarr mit der Antriebswelle 11 verbunden, während die Zahnräder 23 und 24 als Los- bzw. Schalträder drehbar auf der Antriebswelle 11 angeordnet sind.

Mittels einer Schaltmuffe 25 üblicher Bauart, die in zwei Schaltrichtungen verschiebbar ist, kann wahlweise eines der beiden Losräder 23 oder 24 drehstarr mit der Antriebswelle 11 verbunden werden.

Die erste Zwischenwelle 13 trägt Zahnräder 30 bis 32. Die Zahnräder 30 und 31 sind dabei wiederum als Los- bzw. Schalträder und das Zahnrad 32 als Festrad ausgebildet. Eine Schaltmuffe 33 dient zur wahlweisen drehstarren Verbindung der Zahnräder 30 oder 31 mit der ersten Zwischenwelle 13.

Die zweite Zwischenwelle 14 des Getriebes 10 trägt Zahnräder 40 bis 44. Die Zahnräder 40, 43 und 44 sind dabei als Festräder ausgebildet, während die Zahnräder 41 und 42 als Los- oder Schalträder frei drehbar auf der zweiten Zwischenwelle 14 angeordnet sind. Eine Schaltmuffe 45, die ebenfalls in zwei Schaltrichtungen verschiebbar ist, dient zum wahlweisen drehstarren Verbinden eines der beiden Losräder 41 oder 42 mit der zweiten Zwischenwelle 14.

Das Festrad 40 der zweiten Zwischenwelle 14 kämmt mit einem Zahnrad 50 der Abtriebswelle 15, das Teil eines Differentials 51 herkömmlicher Bauart ist.

Bei dem in Fig. 1 dargestellten Ausführungsbeispiel dient die erste Schaltmuffe 25 zum Einlegen des dritten Ganges (linke Stellung) und des vierten Ganges (rechte Stellung). Die zweite Schaltmuffe 33 dient zum Einlegen des ersten Ganges (linke Stellung) bzw. des zweiten Ganges (rechte Stellung). Die dritte Schaltmuffe 45 dient zum Einlegen des Rückwärtsganges (linke Stellung) bzw. des fünften Ganges (rechte Stellung).

Wie aus den Seitendarstellungen der Fig. 2 bis 6 folgt, sind unterschiedliche Zahnradpaare der drei Wellen 11, 13, 14 in den diversen Ebenen miteinander in Eingriff.

In der Ebene II von Fig. 1, dargestellt in Fig. 2, kämmt zum Beispiel das Festrad 20 der Antriebswelle 11 mit dem Losrad 30 (das ist das Schaltrad des ersten Ganges) der ersten Zwischenwelle 13 und dieses wiederum kämmt mit dem Losrad 41 (das ist das Schaltrad des Rückwärtsganges) der zweiten Zwischenwelle 14.

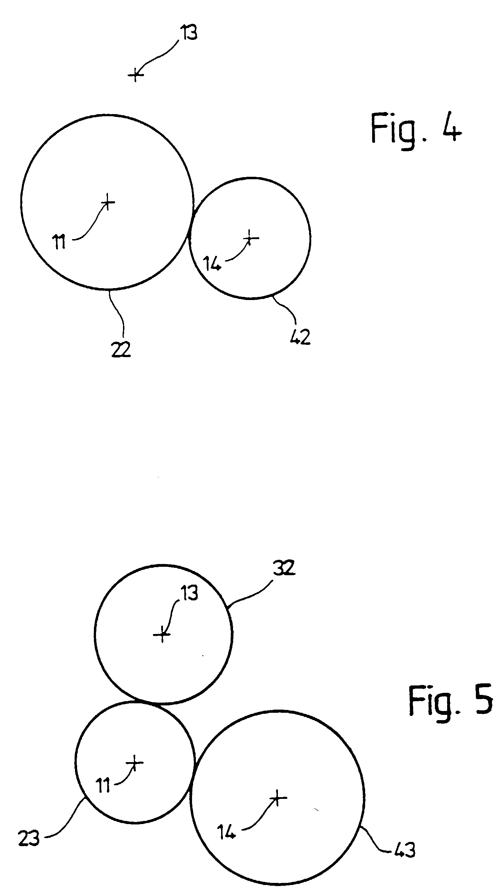

In den Ebenen III und IV entsprechend den Darstellungen der Fig. 3 und 4 befinden sich jeweils nur in herkömmlicher Weise zwei Zahnradpaare 21/31 bzw. 22/42 miteinander in Eingriff. Durch diese Radpaare werden der zweite bzw. der fünfte Gang dargestellt.

In der Ebene V von Fig. 1, entsprechend der Detaildarstellung in Fig. 5, findet wiederum ein Kraftfluß über alle drei Wellen 11, 13, 14 statt. Hierzu kämmt das Losrad 23 (das ist das Schaltrad des dritten Ganges) auf der Antriebswelle 11 gleichzeitig mit dem Festrad 32 auf der ersten Zwischenwelle 13 und im Festrad 43 auf der zweiten Zwischenwelle 14.

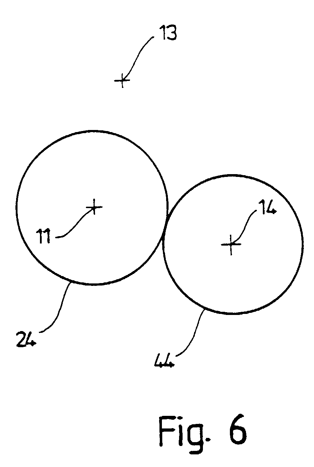

In der Ebene VI, entsprechend der Darstellung in Fig. 6, findet sich wiederum nur ein Zahnradpaar 24/44 zur Darstellung des vierten Ganges.

Im ersten Gang läuft somit der Kraftfluß über die Elemente 11, 20, 30, 33, 13, 32, 23, 43, 14, 40, 50, 15.

Im zweiten Gang läuft somit der Kraftfluß über die Elemente 11, 21, 31, 33, 13, 32, 23, 43, 14, 40, 50, 15.

Im dritten Gang läuft somit der Kraftfluß über die Elemente 11, 25, 23, 43, 14, 40, 50, 15.

Im vierten Gang läuft somit der Kraftfluß über die Elemente 11, 25, 24, 44, 14, 40, 50, 15.

Im fünften Gang läuft somit der Kraftfluß über die Elemente 11, 22, 42, 45, 14, 40, 50, 15.

Im Rückwärtsgang läuft somit der Kraftfluß über die Elemente 11, 20, 30, 41, 45, 14, 40, 50, 15.

Aus der vorstehenden Erläuterung wird erkennbar, daß das dargestellte Ausführungsbeispiel eines erfindungsgemäßen Getriebes eine kurze Bauweise aufweist, bei der die Anzahl der Synchroneinrichtungen an den Schaltmuffen 25, 33 und 45 sowie deren Betätigungselemente optimal genutzt werden.

Verglichen mit dem eingangs erläuterten bekannten Getriebe wird zwar bei dem erfindungsgemäßen Getriebe der Kraftfluß im ersten und im zweiten Gang über mehr Zahnräder geleitet, so daß zusätzliche Zahneingriffe und damit gewisse Verluste verbunden sind, bei dem geringen Fahrzeuganteil dieser Gänge führt dies jedoch lediglich zu einer vernachlässigbaren Einbuße an Gesamt-Wirkungsgrad.

Das dargestellte Ausführungsbeispiel kann, wie bereits weiter oben erwähnt, in mannigfaltiger Weise variiert werden.

## Patentansprüche

1. Mehrgang-Stufengetriebe mit einer Antriebswelle (11), mit einer ersten und einer zweiten Zwischenwelle (13, 14) und mit einer Abtriebswelle (15), wobei die Wellen (11, 13, 14, 15) zueinander parallel, jedoch nur jeweils paarweise in einer gemeinsamen Ebene angeordnet sind, und auf den Wellen (11, 13, 14) angeordnete Zahnräder (20 bis 24, 30 bis 32, 40 bis 44) jeweils zu Paaren (20/30, 21/31, 22/42, 23/43, 24/44, 30/41, 32/43) miteinander kämmen, ferner Schaltmuffen (25, 33, 45) zum drehfesten Verbinden jeweils eines der als Losräder (23, 24, 30, 31, 41, 42) ausgebildeten Zahnräder der Paare (20/30, 21/31, 22/42, 23/43, 24/44, 30/41, 32/43) mit der sie jeweils tragenden Welle (11, 13, 14) vorgesehen sind, während das jeweils andere Rad der Paare (20/30, 21/31, 22/42, 23/43, 24/44, 30/41, 32/43) als Festrad (20, 21, 22, 32, 43, 44) ausgebildet ist, weiterhin die Antriebswelle (11) eine erste, in zwei Schaltrichtungen verschiebbare Schaltmuffe (25) zum wahlweisen Einlegen zweier Vorwärtsgänge des Getriebes (10), hingegen die mit der Abtriebswelle (15) über ein Zahnradpaar (40, 50) verbundene zweite Zwischenwelle (14) eine zweite, in zwei Schaltrichtungen verschiebbare Schaltmuffe (45) zum wahlweisen Einlegen zweier weiterer Gänge des Getriebes (10) und schließlich die erste Zwischenwelle (13) eine dritte Schaltmuffe (33) tragen, dadurch gekennzeichnet, daß die dritte Schaltmuffe (33) in zwei Schaltrichtungen verschiebbar ist und zum wahlweisen Einlegen zweier zusätzlicher Vorwärtsgänge dient.

2. Getriebe nach Anspruch 1, das als 5-Gang-Getriebe mit synchronisiertem Rückwärtsgang ausgebildet ist, dadurch gekennzeichnet, daß die erste Schaltmuffe (25) zum wahlweisen Einlegen des dritten und des vierten Ganges, die zweite Schaltmuffe (45) zum wahlweisen Einlegen des fünften und des Rückwärtsganges, und die dritte Schaltmuffe (33) zum wahlweisen Einlegen des ersten und des zweiten Ganges dienen.

3. Getriebe nach Anspruch 2, dadurch gekennzeichnet, daß das Losrad (30) des ersten Ganges mit dem Losrad (41) des Rückwärtsganges kämmt.

## Claims

1. A multiple gear stepped transmission comprising an input shaft (11), a first and a second intermediate shaft (13, 14) and an output shaft (15), the shafts (11, 13, 14, 15) being arranged parallel to each other but are only in pairs arranged in common planes, wherein toothed wheels (20 through 24, 30 through 32, 40 through 44) are arranged on the shafts (11, 13, 14) and mesh with each other in pairs (20/30, 21/31, 22/42, 23/43, 24/44, 30/41, 32/43), gearshift sleeves (25, 33, 45) being provided for individually connecting one each of the toothed wheels designed as loose wheels (23, 24, 30, 31, 41, 42) within said pairs (20/30, 21/31, 22/42, 23/43, 24/44, 30/41, 32/43) of toothed wheels with its respective supporting shaft (11, 13, 14) for establishing joint rotation therewith, whereas the respective other each of the toothed wheels within said pairs (20/30, 21/31, 22/42, 23/43, 24/44, 30/41, 32/43) are designed as fixed toothed wheels (20, 21, 22, 32, 43, 44), wherein, further, the input shaft (11) carries a first gearshift sleeve (25) being displaceable in two shift directions for alternatively engaging two forward gears, whereas the second intermediate shaft (14) being connected to the output shaft (15) via a pair (40, 50) of toothed wheels carries a second gearshift sleeve (45) being displaceable in two shift directions for alternatively engaging two further gears of the transmission (10), and whereas the first intermediate shaft ((13) carries a third gearshift sleeve (33), characterized in that the third gearshift sleeve (33) is displaceable in two shift directions and is adapted to alternatively engage two further forward gears.

2. The transmission of claim 1, being designed as a five gear transmission having a synchronized reverse gear, characterized in that the first gearshift sleeve (25) is adapted to alternatively engage the third or the fourth gear, the second gearshift sleeve is adapted to alternatively engage the fifth gear or the reverse gear and the third gearshift sleeve (33) is adapted to alternatively engage the first or the second gear.

3. The transmission of claim 2, characterized in that the loose toothed wheel (30) of the first gear meshes with the loose toothed gear (41) of the reverse gear.

## Revendications

1. Transmission à rapports étagés comprenant un arbre d'entrée (11), un premier et un second arbres intermédiaires (13, 14) et un arbre de sortie, (15), dans laquelle les arbres (11, 13, 14, 15) sont parallèles les uns aux autres mais coplanaires uniquement deux à deux, des roues dentées (20 à 24, 30 à 32, 40 à 44) agencées sur les arbres (11, 13, 14) sont en prise les unes avec les autres pour former des paires (20/30, 21/31, 22/42, 23/43, 24/44, 30/41, 32/43), des crabots (25, 33, 45) sont en outre prévus pour relier en rotation la roue dentée folle (23, 24, 30, 31, 41, 42) de chaque paire (20/30, 21/31, 22/42, 23/43, 24/44, 30/41, 32/43) à l'arbre (11, 13, 14) qui la supporte, l'autre roue de la paire (20/30, 21/31, 22/42, 23/43, 24/44, 30/41, 32/43) étant une roue entraînée (20, 21, 22, 32, 43, 44), l'arbre d'entrée (11) porte en outre un premier crabot (25) mobile dans deux directions d'engagement, pour engager sélectivement deux rapports en marche avant de la transmission (10), le second arbre intermédiaire (14) relié à l'arbre de sortie (15) par une paire de roues dentées (40, 50) porte quant à lui un deuxième crabot (45) mobile dans deux directions d'engagement pour engager sélectivement deux autres rapports de la transmission (10) et enfin le premier arbre intermédiaire (13) porte un troisième crabot (33), caractérisé en ce que le troisième crabot (33) est mobile dans deux directions d'engagement et sert à l'engagement sélectif de deux rapports supplémentaires en marche avant.

2. Transmission selon la revendication 1, conçue sous la forme d'une transmission à 5 rapports avec marche arrière synchronisée, caractérisée en ce que le premier crabot (25) sert à l'engagement sélectif de la troisième et de la quatrième vitesses, en ce que le second crabot (45) sert à l'engagement sélectif de la cinquième vitesse et de la marche arrière et en ce que le troisième crabot (33) sert à l'engagement sélectif de la première et de la deuxième vitesses.

3. Transmission selon la revendication 2, caractérisée en ce que la roue folle (30) du premier rapport est en prise avec la roue folle (41) du rapport de marche arrière.
